# EUROPEAN PATENT APPLICATION

(11) **EP 2 141 581 A1**
(43) Date of publication of application: **06.01.2010**
(21) Application number: 09004838.0
(22) Date of filing: 01.04.2009
(51) Int. Cl.: G06F 3/048

(54) **Cursor control device**

(30) Priority: 01.07.2008 TW 97124791
(71) Applicant: Avermedia Information, Inc., Chung Ho Taipei 235 (TW)
(72) Inventor: Yen, Christopher, Taipei 235 (TW); Wu, Jiun-Shin, Taipei 235 (TW); Lee, Tzung-Lin, Taipei 235 (TW); Yu, Chen-Hsiang, Taipei 235 (TW); Kuo, Mei-Jen, Taipei 235 (TW)
(74) Representative: Winkler, Andreas Fritz Ernst

(57) **Abstract**

A cursor control device includes a pen-like body (21), a motion-detecting element (210), a microcontroller (30) and a button element (211). The motion-detecting element (210) is disposed at a first side of the pen-like body (21) for generating a coordinate change signal in response to a motion of a first finger of the user. The microcontroller (30) is disposed within the pen-like body (21) and communicated with the motion-detecting element (210) and a computer system (2). According to the coordinate change signal, the microcontroller (30) issues a cursor control signal to the computer system (2). The button element (211) is disposed at a second side of the pen-like body (21) and communicated with the microcontroller (30) for triggering the microcontroller (30) to generate an object locking control signal in response to a depressing action of a second finger of the user. The object (202) pointed by the cursor (201) is locked according to the object locking control signal and moved according to the cursor control signal.

## Description

The present invention relates to a cursor control device, and more particularly to a cursor control device for use with a computer system.

Human-machine interface input devices are essential components of various electronic information products such as personal computers. In the early stage, the customarily used human-machine interface input devices include for example keyboards, trackballs, mice, touch pads, and so on. For helping the user well operate the computer system, the human-machine interface input devices are continuously developed in views of intuitive, easy-to-use and swift operations. Recently, a presenter is an exemplary human-machine interface input device complying with these requirements.

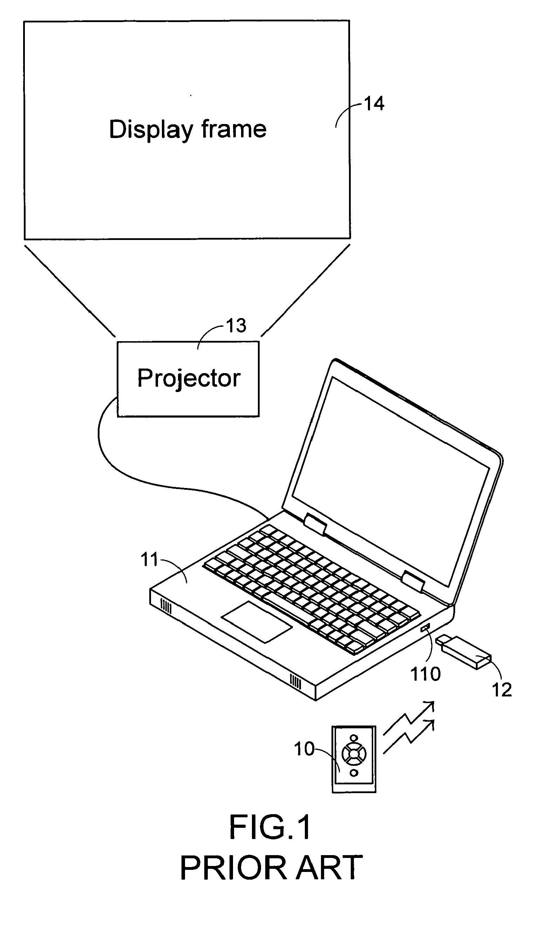

FIG. 1 is a schematic functional block illustrating collective operations of a conventional presenter and a personal computer. According to a command inputted into the presenter 10 by a user, the presenter 10 issues a wireless control signal to a wireless transceiver 12, which is connected to a connecting port 110 of the personal computer 11. According to the wireless control signal, the personal computer 11 is controlled to generate a display frame 14 through a projector 13. Based on three principal technologies, three types of cursor control devices are designed for controlling cursor movement on the display frame 14 by means of the presenter 10. These technologies include a cursor control technology used in an optical mouse, a touch control technology used in a handwriting plate and a motion-sensing gyroscope technology used in an air mouse.

As known, the first and second cursor control devices designed according to the first and second technologies need a working plane. If the first and second cursor control devices are not contacted with the working plane, such cursor control devices fail to be normally operated and thus are not applicable in the situation when the user is moved from a place to another place. On the other hand, the third cursor control device can control the cursor without the need of the working plane. Since the gyroscope module of the air mouse senses rotation of the joint of the human's arm to generate corresponding cursor movement in the coordinate system, the complicated operating method becomes hindrance from using the air mouse, particularly for the uneducated users. Consequently, the third cursor control device is not popular. Moreover, the gyroscope module is very sensitive to temperature variations and thus difficult to be subject to mass production. In cooperation with a G-sensor and firmware, the applications of the gyroscope module are expanded but the extra components increase the fabricating cost.

Therefore, there is a need of providing an improved cursor control device to obviate the drawbacks encountered from the prior art.

The present invention provides a cursor control device for use with a computer system showing a cursor and an object. The cursor control device includes a pen-like body, a motion-detecting element, a microcontroller and a button element. The pen-like body is held by a user. The motion-detecting element is disposed at a first side of the pen-like body for generating a coordinate change signal in response to a motion of a first finger of the user. The microcontroller is disposed within the pen-like body and communicated with the motion-detecting element and the computer system. According to the coordinate change signal, the microcontroller issues a cursor control signal to the computer system. The button element is disposed at a second side of the pen-like body and communicated with the microcontroller for triggering the microcontroller to generate an object locking control signal in response to a depressing action of a second finger of the user. The object pointed by the cursor is locked according to the object locking control signal and moved according to the cursor control signal.

In an embodiment, the cursor control device further includes a mouse optical sensor disposed within the pen-like body. The mouse optical sensor emits a light beam to a handwriting plane through the tip of the pen-like body and receives the light beam reflected from the handwriting plane, thereby generating another coordinate change signal.

In an embodiment, the cursor control device further includes a wireless receiving and transmitting module electrically connected to the microcontroller for transmitting the cursor control signal to the computer system in a wireless transmission manner.

In an embodiment, the motion-detecting element is an optical touch pad generating the coordinate change signal in response to the motion of the first finger of the user.

In an embodiment, the motion-detecting element and the button element are disposed at opposite sides of the pen-like body. The first and second fingers of the user are a thumb and a forefinger of the user, respectively.

In an embodiment, the button element further includes a light source and a light guide structure. The light guide emits a light beam in response to the depressing action. The light beam is guided by the light guide structure to light up the periphery of the button element.

In an embodiment, the cursor control device further includes several command input keys having respective light sources and light guide structures. The light source of the command input key which is depressed emits a light beam. The light beam is guided by the corresponding light guide structure to light up the periphery of the depressed command input key.

The above contents of the present invention will become more readily apparent to those ordinarily skilled in the art after reviewing the following detailed description and accompanying drawings, in which:
FIG. 1 is a schematic functional block illustrating collective operations of a conventional presenter and a personal computer;
FIG. 2 is a schematic outward view illustrating a cursor control device according to a preferred embodiment of the present invention;
FIG. 3 is a schematic function diagram of the cursor control device of the present invention;
FIG. 4 schematically illustrates a flowchart of determining whether the motion-detecting element or the mouse optical sensor is selectively enabled or disenabled; and
FIG. 5 schematically illustrates command input keys of the cursor control device of the present invention.

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

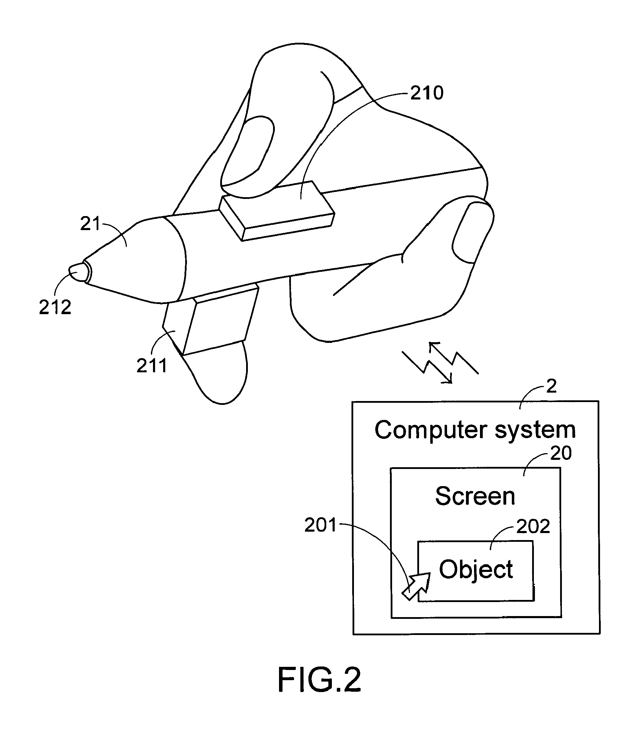

The present invention provides a cursor control device in order to obviate the drawbacks encountered from the prior art. FIG. 2 is a schematic outward view illustrating a cursor control device according to a preferred embodiment of the present invention. The cursor control device is applied to a computer system 2. The cursor control device is communicated with the computer system 2 in a wired or wireless transmission manner. By operating the cursor control device, a cursor 201 and an object 202 shown on a screen 20 are controllable. As shown in FIG. 2, the cursor control device principally comprises a pen-like body 21, a motion-detecting element 210, a button element 211 and a mouse optical sensor 212. The pen-like body 21 may be held by a user. The motion-detecting element 210 is disposed at a first side of the pen-like body 21. In response to a motion of the user's thumb on the motion-detecting element 210, the cursor control device generates a cursor control signal and causes corresponding movement of the cursor 201 shown on the screen 20. The button element 211 is disposed at a second side of the pen-like body 21. In response to a depressing action of the user's forefinger, the object 202 pointed by the cursor 201 is locked and thus the locked object 202 is moved according to the cursor control signal. The mouse optical sensor 212 is disposed within the pen-like body 21 and near the tip of the pen-like body 21. The mouse optical sensor 212 may emit a light beam to a handwriting plane (not shown) through the tip of the pen-like body 21.

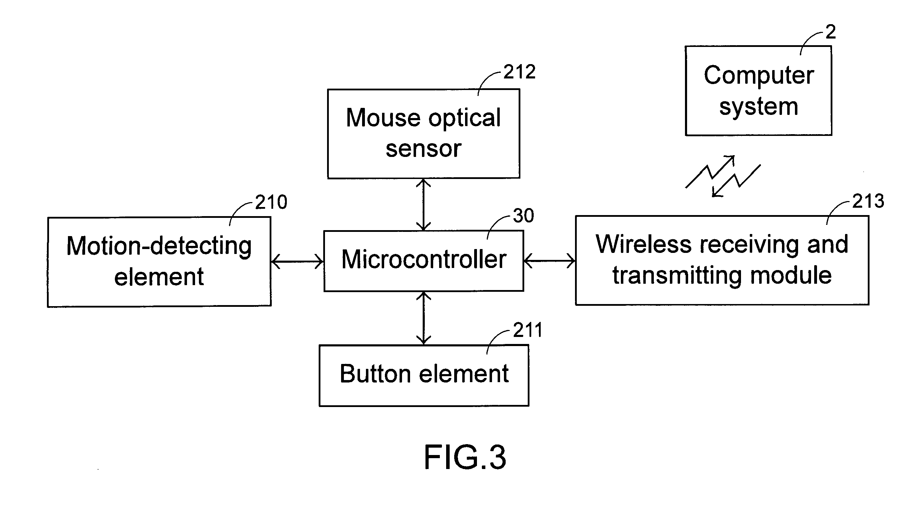

FIG. 3 is a schematic function diagram of the cursor control device of the present invention. Please refer to FIGS. 2 and 3. A microcontroller 30 is disposed within the pen-like body 21 and communicated with the motion-detecting element 210, the button element 211, the mouse optical sensor 212 and also a wireless receiving and transmitting module 213. According to a coordinate change signal generated by the motion-detecting element 210 or the mouse optical sensor 212, the microcontroller 30 issues a cursor control signal. Through the wireless receiving and transmitting module 213, the cursor control signal is transmitted to the computer system 2 in a wireless transmission manner. An example of the motion-detecting element 210 includes but is not limited to an optical touch pad or a trackball module, which can generate a coordinate change signal in response to a motion of the user's thumb. The mouse optical sensor 212 may emit a light beam onto a handwriting plane through the tip of the pen-like body 21. After the light beam reflected from the handwriting plane is received by the mouse optical sensor 212, the mouse optical sensor 212 generates another coordinate change signal.

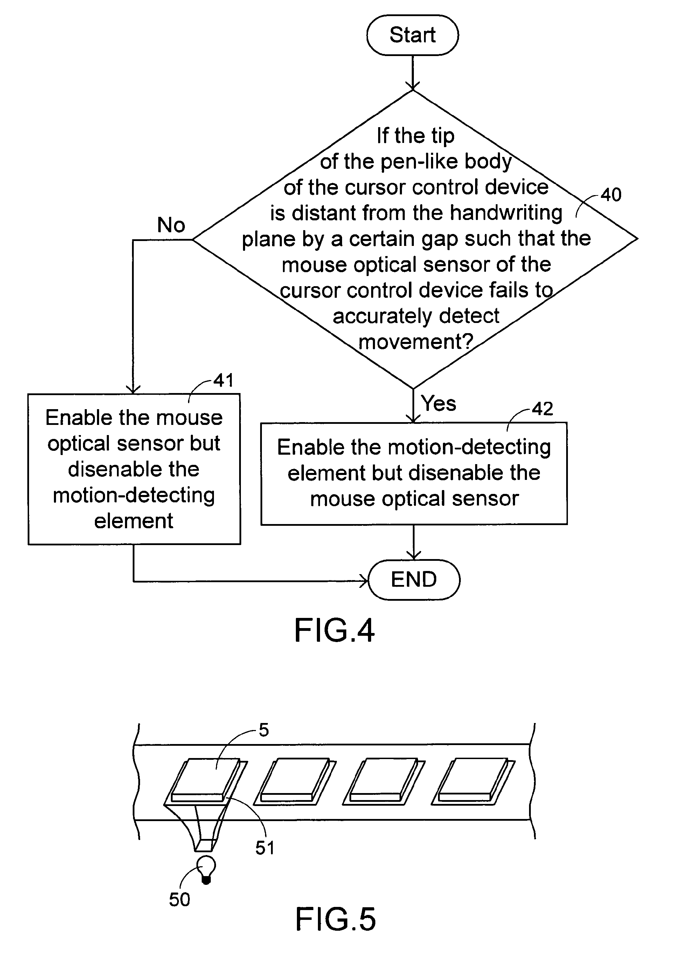

From the above description, the cursor 201 is controlled by corresponding actions on the motion-detecting element 210 or the mouse optical sensor 212. For selecting one of the motion-detecting element 210 and the mouse optical sensor 212 to control the cursor 210 according to the practical requirements, a strategy of determining whether the motion-detecting element 210 or the mouse optical sensor 212 is selectively enabled or disenabled will be illustrated with reference to a flowchart of FIG. 4. If the tip of the pen-like body of the cursor control device is distant from the handwriting plane by a certain gap such that the mouse optical sensor 212 of the cursor control device fails to accurately detect movement (Step 40), the motion-detecting element 210 is enabled to control the cursor 210 but the mouse optical sensor 212 is disenabled (Step 42). Whereas, if the tip of the pen-like body of the cursor control device is distant from the handwriting plane within the sensing range of the sensor, the mouse optical sensor 212 is enabled to control the cursor 210 but the motion-detecting element 210 is disenabled (Step 41). When the motion-detecting element 210 is enabled to take the power of controlling the cursor 210, the cursor 210 shown on a screen 20 is moved in response to a motion of the user's thumb on the motion-detecting element 210. Furthermore, if the object 202 is pointed by the cursor 201 and the button element 211 is depressed by the user's forefinger, the microcontroller 30 is triggered to generate an object locking control signal. As a consequence, the object 202 pointed by the cursor 201 is locked according to the object locking control signal and the locked object 202 is moved according to the cursor control signal. Under this circumstance, the cursor control device of the present invention can easily drag a window or an object. Since it is not necessary to use both hands to individually operate the motion-detecting element 210 and the button element 211, the cursor control device of the present invention is very user-friendly and convenient.

The cursor control device of the present invention may be used with an electronic whiteboard. When making a presentation, holding a meeting or giving a lecture, the attendants may keep their notes and annotations on the electronic whiteboard in order to achieve an opinion feedback purpose. The technology of the electronic whiteboard is disclosed in for example US Patent Application No. 12/207,675, and the contents of which are hereby incorporated by reference. The cursor control device of the present invention can control the pointer shown on the electronic whiteboard so as to handwrite, discuss, vote or answer question on the electronic whiteboard. For achieving the above purposes, the cursor control device of the present invention further comprises several command input keys 5, as is shown in FIG. 5. Each of the command input keys 5 has a light source 50 and a light guide structure 51. When one of the command input keys 5 is depressed, a corresponding light source 51 continuously emits a light beam. The light beam is guided by the light guide structure 51 to light up periphery of the depressed command input key 5. When the user vote or answer question on the electronic whiteboard, the user may identify whether the selected command input key 5 have been successfully depressed. Since no additional screen is required, the cursor control device of the present invention is cost-effective. Alternatively, the button element 211 may further comprise a light source and a light guide structure to achieve the same purposes as the command input keys 5.

From the above description, the cursor control device of the present invention is capable of obviating the drawbacks encountered from the prior art. Moreover, the cursor control device of the present invention may be integrated into any presentation system having an opinion feedback function.

While the invention has been described in terms of what is presently considered to be the most practical and preferred embodiments, it is to be understood that the invention needs not to be limited to the disclosed embodiment. On the contrary, it is intended to cover various modifications and similar arrangements included within the spirit and scope of the appended claims which are to be accorded with the broadest interpretation so as to encompass all such modifications and similar structures.

The features disclosed in the foregoing description, in the claims and/or in the accompanying drawings may, both separately and in any combination thereof, be material for realizing the invention in diverse forms thereof.

## Claims

1. A cursor control device for use with a computer system (2) showing a cursor (201) and an object (202), **characterized in that** the cursor control device comprises:
a pen-like body (21) to be held by a user;
a motion-detecting element (21) disposed at a first side of the pen-like
body (21) for generating a coordinate change signal in response to a motion
of a first finger of the user;
a microcontroller (30) disposed within the pen-like body (21) and
communicated with the motion-detecting element (21) and the computer system (2), the microcontroller (30) issuing a cursor control signal to the computer system (2) according to the coordinate change signal; and
a button element (211) disposed at a second side of the pen-like body (21) and communicated with the microcontroller (30) for triggering the microcontroller (30) to generate an object locking control signal in response to a depressing action of a second finger of the user, wherein the
object (202) pointed by the cursor (201) is locked according to the object locking control signal and moved according to the cursor control signal.

2. The cursor control device according to claim 1, **characterized in that** the cursor control device further comprises a mouse optical sensor (212) disposed within the pen-like body (21), wherein the mouse optical sensor (212) emits a light beam to a handwriting plane through the tip of the pen-like body (21) and receives the light beam reflected from the handwriting plane, thereby generating another coordinate change signal.

3. The cursor control device according to claim 1, **characterized in that** the cursor control device further comprises a wireless receiving and transmitting module (213) electrically connected to the microcontroller (30) for transmitting the cursor control signal to the computer system (2) in a wireless transmission manner.

4. The cursor control device according to claim 1, **characterized in that** the motion-detecting element (210) is an optical touch pad generating the coordinate change signal in response to the motion of the first finger of the user.

5. The cursor control device according to claim 1, **characterized in that** the motion-detecting element (210) and the button element (211) are disposed at opposite sides of the pen-like body (21), and the first and second fingers of the user are a thumb and a forefinger of the user, respectively.

6. The cursor control device according to claim 1, **characterized in that** the button element (211) further comprises a light source (50) and a light guide structure (51), the light guide (51) emits a light beam in response to the depressing action, and the light beam is guided by the light guide structure (51) to light up the periphery of the button element (211).

7. The cursor control device according to claim 1, **characterized in that** the cursor control device further comprises several command input keys (5) having respective light sources (50) and light guide structures (51), wherein the light source (50) of the command input key (5) which is depressed emits a light beam, and the light beam is guided by the corresponding light guide structure (51) to light up the periphery of the depressed command input key (5).
